# EUROPEAN PATENT SPECIFICATION

(11) **EP 2 827 468 B1**
(45) Date of publication and mention of the grant of the patent: **06.09.2017**
(21) Application number: 13761833.6
(22) Date of filing: 12.03.2013
(51) Int. Cl.: H02J 7/02, B60L 11/18, H01M 10/44, H01M 10/48, H02J 7/14

(54) **EQUALIZATION DEVICE**
ENTZERRUNGSVORRICHTUNG
DISPOSITIF D'ÉGALISATION

(30) Priority: 16.03.2012 JP 2012059929
(43) Date of publication of application: 21.01.2015
(73) Proprietor: Yazaki Corporation, Minato-ku Tokyo 108-8333 (JP)
(72) Inventor: SUZUKI, Shingo, Susono-shi Shizuoka 410-1194 (JP)
(74) Representative: Grünecker Patent- und Rechtsanwälte PartG mbB
(86) International application number: PCT/JP2013/056740
(87) International publication number: WO 2013/137229

(56) References cited:
- WO-A1-03/032464
- JP-A- 2002 369 400
- JP-A- 2002 369 400
- JP-A- 2004 120 871
- JP-A- 2006 246 645
- US-A1- 2004 246 635
- US-A1- 2009 267 566

## Description

The present invention relates to an equalization device, and more particularly to an equalization device that equalizes both-end voltages of a plurality of unit cells connected to each other in series.

In recent years, a hybrid electric vehicle (which will be referred to as an HEV hereinafter) that travels with the use of both an engine and an electric motor has widely spread. This HEV is provided with two types of batteries, i.e., a low-voltage battery of approximately 12 V for starting the engine and a high-voltage battery as a battery pack for driving the electric motor. The above-described high-voltage battery provides a high voltage by using a secondary battery such as a nickel-metal hydride battery or a lithium battery as a unit cell and by connecting the plurality of units cells in series.

Both-end voltages of the respective unit cells, i.e., a state of charge (SOC) varies while charging and discharging of the high-voltage battery are repeated. As to charging and discharging of the battery, in light of durability or safety ensuring of each unit cell, charging must be inhibited when the unit cell having the highest SOC (or both-end voltage) has reached a set upper limit SOC (or upper limit both-end voltage value), and discharging must be inhibited when the unit cell having the lowest SOC (or both-end voltage) has reached a set lower limit SOC (or lower limit both-end voltage value). Therefore, when the SOC of the respective unit cells varies, a usable capacity of the battery is practically reduced. Therefore, in the HEV, supplying battery energy with respect to a gasoline at the time of traveling up a hill or regenerating the energy with respect to the battery at the time of traveling down a hill, i.e., so-called assist regeneration becomes insufficient, and vehicle power performance or fuel consumption becomes lowered. Therefore, there has been suggested an equalization device that equalizes both-end voltages of the respective unit cells by charging or discharging the respective unit cells (e.g., JP-A-2010-263733)

An equalization device disclosed inJP-A-2010-263733 obtains a both-end voltage of each unit cell and discharges a unit cell having the highest both-end voltage with the use of a resistor to perform equalization to the lowest both-end voltage. In such a discharge type equalization device, since a capacity of each unit cell is discharged, the capacity of each unit is wasted. Further, execution determination of the equalization is based on the detected both-end voltage of the unit cell. Therefore, there is a problem that a capability of the equalization is dependent on a detection accuracy of a both-end voltage of each unit cell and enhancing an equalization accuracy is difficult. Furthermore, there is also a problem that the equalization can be carried out only during stopping of a vehicle when a both-end voltage of each unit cell is stable (when an ignition is OFF).

Thus, there has been also suggested a charge pump type equalization device that sequentially and periodically connects one capacity to both ends of each unit cell thereby moving an electric charge from a unit cell having a high both-end voltage to a unit cell having a low both-end voltage through the capacitor (JP-A-H10-225005). However, the charge pump type equalization device enables highly precise equalization but has a problem that an equalization speed is low since there is a limit in a charge amount that enables charge pump by using the capacitor and equalization requires a lot of time when a variation in unit cells is considerable.

Reference US 2009/267566 (A1) discloses a car power source apparatus that is provided with a series battery array having a plurality of rechargeable batteries connected in series to supply power to an electric motor that drives the car, equalizing circuits that equalize battery electrical characteristics by discharging or charging each battery of the series battery array, a cut-off mechanism connected in series with the series battery array to disconnect the series connection, and a stopping circuit that detects the cut-off state of the cut-off mechanism and controls equalizing circuit operation. In this car power source apparatus, the stopping circuit detects cut-off due to cut-off mechanism removal and stops the equalizing operation performed by the equalizing circuits.

It is, therefore, an object of the present invention to provide an equalization device that can perform equalization rapidly with high accuracy.

This is achieved by the features of the independent claim. Preferred embodiments are the subject matter of dependent claims.

According to the invention of claim 1 or 2, when a variation in both-end voltages of the respective unit cells is large, the variation is rapidly reduced by using the discharge resistor, then equalization can be highly accurately performed with the use of the charging capacitor, and hence the equalization can be performed rapidly with highly accuracy.

According to the invention of claim 3, the equalization can be performed with the use of the charging capacitor during the ignition ON period that a both-end voltage of each unit cell is unstable or during the charging/discharging period of each unit cell, and either the equalization using the discharge resistor or the equalization using the charging capacitor can be selected based on the both-end voltage of each unit cell during the ignition OFF period that the both-end voltage of each unit cell is stable or during the non-charging/non-discharging period of each unit cell.

According to the invention of claim 4, since the first equalizer connects all the unit cells, whose both-end voltages detected by the voltage detector are equal to or greater than the threshold value determined by the plurality of both-end voltages, to the discharge resistor, the variation can be further rapidly reduced.

According to the invention of claim 5, since the second equalizer turns on/off the changeover switch group so that both the poles of the charging capacitor are sequentially connected to the (n-m+1) unit cells adjacent to each other from a lower order to an upper order or from the upper order to the lower order, an electric charge is moved by using the plurality of charging capacitors, and hence the equalization can be rapidly carried out. Further, since the equalization can be carried out without performing the voltage detection, the equalization can be effected while a vehicle is traveling or stopping (while the ignition switch is ON).

According to the invention of claim 6, since the power is not taken out from the unit cells in order to drive the drive circuit, the capacity of the unit cells can be equalized with no waste. Further, causes of the variation in both-end voltages of the unit cells can be eliminated.

### BRIEF DESCRIPTION OF DRAWINGS

FIG. 1 is a block diagram showing an embodiment of an equalization device according to the present invention;
FIG. 2 is a circuit diagram showing particulars of an equalization embodying section constituting the equalization device depicted in FIG. 1;
FIG. 3 is a peripheral circuit diagram of an arbitrary charging capacitor constituting the equalization embodying section depicted in FIG. 1;
FIGS. 4A,4B are schematic circuit diagrams for explaining an operation of the equalization embodying section depicted in FIG. 2;
FIG. 5 is a circuit diagram for explaining particulars of a level shift circuit depicted in FIG. 2;
FIG. 6 is a flowchart showing an equalization processing procedure of a microcomputer constituting the equalization device depicted in FIG. 1;
FIG. 7 is a time chart of ON signals relative to FETs Q21 and Q22;
FIG. 8 is a circuit diagram showing particulars of an equalization embodying section in another embodiment; and
FIG. 9 is a schematic circuit diagram for explaining an operation of the equalization embodying section in another embodiment.

### BEST MODE(S) FOR CARRYING OUT THE INVENTION

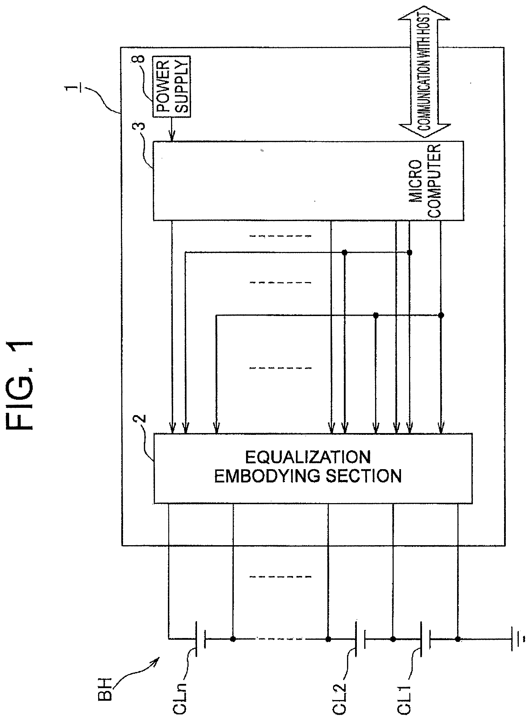

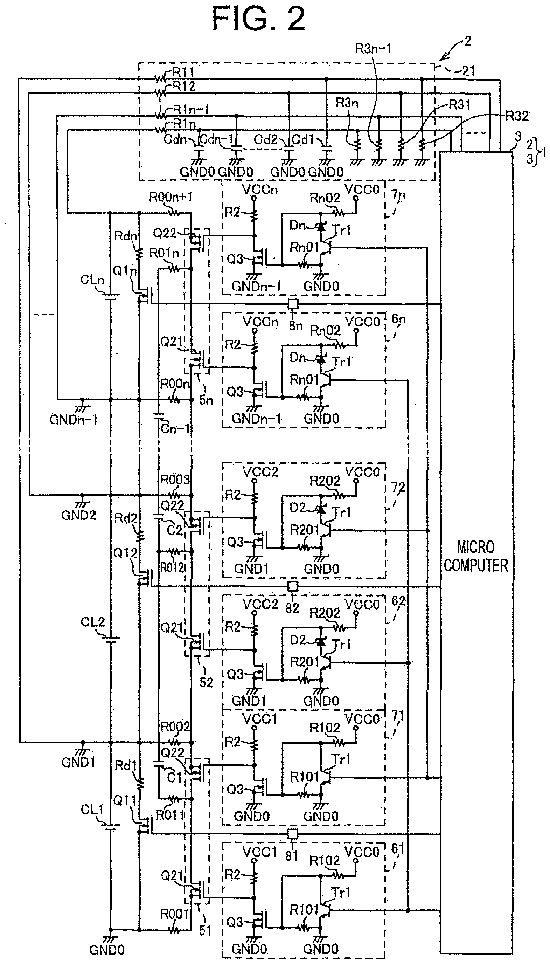

An equalization device according to the present invention will now be described with reference to FIG. 1 and FIG. 2. FIG. 1 is a block diagram showing an embodiment of an equalization device according to the present invention. FIG. 2 is a circuit diagram showing particulars of the equalization device depicted in FIG. 1. As shown in the drawings, an equalization device 1 is a device that equalizes both-end voltages of n(n≥3) unit cells CL 1 to CLn that constitute a high-voltage battery BH and are connected in series. Each of the unit cells CL1 to CLn is composed of one secondary battery in this embodiment, but it may be composed of a plurality of secondary batteries. The high-voltage battery BH is used as, e.g., a power supply of an electric motor in a hybrid electric vehicle that employs both an engine and the electric motor (both of them are not shown) as a traveling drive source, the electric motor is connected as a load to both ends thereof as required, and an alternator or the like (not shown) is also connected as a charger if need arises.

As shown in FIG. 1, the equalization device 1 includes an equalization embodying section 2 that performs equalization of n(n≥3) unit cells CL1 to CLn and a microcomputer 3 as first equalizer, second equalizer, equalization selector, and equalization determiner for controlling this equalization embodying section 2. As shown in FIG. 2, the equalization embodying section 2 includes a voltage detection circuit 21 as voltage detector for detecting respective both-end voltages of the unit cells CL1 to CLn, n discharge resistors Rd1 to Rdn, field-effect transistors (FET) Q11 to Q1n as n first switches that connect the unit cells CL1 to Cln to the discharge resistors Rd1 to Rdn, n-1(=m) charging capacitors C1 to Cn-1, n(=m+1) FET pairs 51 to 5n provided so that both poles of each of the charging capacitors Cp (p is an arbitrary integer meeting 1≤p≤n-1) are sequentially connected to the two (=n-m+1) unit cells CLp and CLp+1 adjacent to each other, and level shift circuits 61 to 6n, 71 to 7n, and 81 to 8n as drive circuits. The lowest order of the two unit cells CL 1 to CLn connected with the respective charging capacitors C1 to Cn-1 is the unit cells CL1 to CLn that are different from each other.

The voltage detection circuit 21 includes resistors R11 to R1n, capacitors Cd1 to Cdn, voltage dividing resistors R31 to R3n, and others. Each of the capacitors Cd1 to Cdn has one end connected to each of positive sides of the unit cells CL1 to CLn through the resistors R11 to R1n and the other end connected to a ground GND0. The resistors R11 to R1n and the capacitors Cd1 to Cdn function as filters. The voltage detection circuit 21 divides both-end voltages of the unit cells CL1 to CLn with the use of the voltage dividing resistors R31 to R3n via the filters and inputs obtained voltages to the microcomputer 3.

That is, with reference to an arbitrary capacitor Cdp, a both-end voltage of the arbitrary capacitor Cdp is equal to a value obtained by adding both-end voltages of the lowest-order unit cell CL1 to the unit cell CLp connected with the arbitrary capacitor Cdp through the resistor R1p on the positive side thereof. In FIG. 2, although the both-end voltages of the capacitors Cd1 to Cdn are directly supplied to the microcomputer 3, the both-end voltages of the capacitors Cd1 to Cdn divided by using a non-illustrated voltage dividing circuit formed of a resistor or the like are actually supplied to the microcomputer 3. Further, the microcomputer 3 obtains the both-end voltages of the respective unit cells CL1 to CLn from the supplied both-end voltages of the capacitors Cd1 to Cdn by an arithmetic operation.

Each of the n discharge resistors Rd1 to Rdn is connected to both ends of each of the unit cells CL1 to CLn. The FETs Q11 to Q1n are connected to the respective discharge resistors Rd1 to Rdn between the opposite ends of the respective unit cells CL1 to CLn in series. Therefore, the discharge resistors Rd1 to Rdn are connected to the unit cells CL1 to CLn and the unit cells CL1 to CLn are discharge when FETs Q11 to Q1n are turned on, and the unit cells CL 1 to CLn are disconnected from the discharge resistors Rd1 to Rdn and the discharging of the unit cells CL1 to CLn is stopped when FETs Q11 to Q1n are turned off.

Each of the n FET pairs 51 to 5n is connected to both the ends of each of the unit cells CL1 to CLn. Each of the FET pairs 51 to 5n is composed of two FETs Q21 and Q22 (corresponding to second switches in claims) connected in series. Of these FETs Q21 and Q22, the FET Q21 on the negative side is an N channel, and the FET Q22 on the positive side is a P channel. Furthermore, these FETs Q21 and Q22 have drains connected to each other, a source of the FET Q21 is connected to the negative side of the unit cells CL 1 to CLn through resistors R001 to R00n, and a source of the FET Q22 is connected to the positive side of the unit cells CL1 to CLn through resistors R002 to R00n+1.

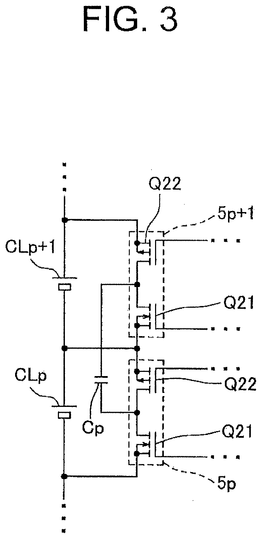

The charging capacitor C 1 is connected between a connecting point of the FETs Q21 and Q22 constituting the FET pair 51 connected to both the ends of the unit cell CL 1 that is one of the unit cells CL 1 and CL2 adjacent to each other and a connecting point of the FETs Q21 and Q22 constituting the FET pair 52 connected to both the ends of the unit cell CL2 that is the other of the same. As shown in FIG. 3, any other arbitrary charging capacitor Cp is likewise connected between a connecting point of the FETs Q21 and Q22 constituting the FET pair 5p connected to both the ends of the unit cell CLp that is one of the unit cells CLp and CLp+1 adjacent to each other and a connecting point of the FETs Q21 and Q22 constituting the FET pair 5p+1 connected to both the ends of the unit cell CLp+1 that is the other of the same. These charging capacitors C 1 to Cn-1 are connected to the connecting points through a resistor R011 to a resistor R01n.

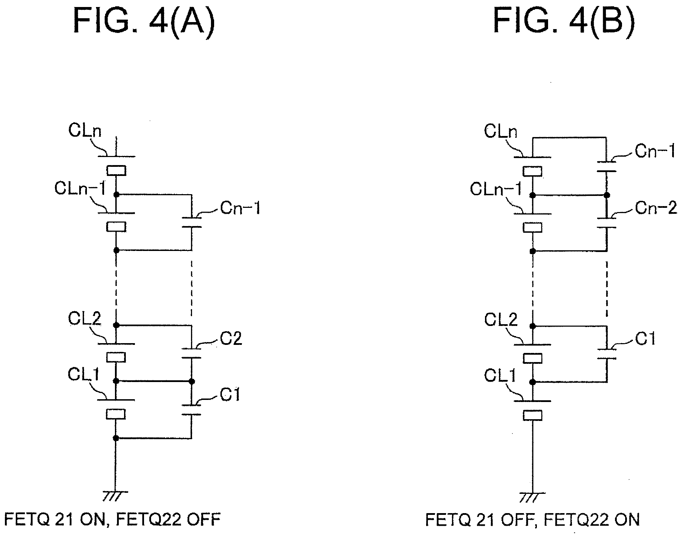

According to the above-described configuration, when the FETs Q21 of all the FET pairs 51 to 5n are turned on and the FETs Q22 of the same are turned off, as shown in FIG. 4(A), the arbitrary charging capacitor Cp is connected to the negative unit cell CLp of the unit cells CLp and CLp+1 adjacent to each other. On the other hand, when the FETs Q21 of all the FET pairs 51 to 5n are tuned off and the FETs Q22 of the same are turned on, as shown in FIG. 4(B), the charging capacitor Cp is connected to the positive unit cell CLp+1 of the unit cells CLp and CLp+1 adjacent to each other. That is, when the FET Q21 and the FET Q22 are alternately turned on, the charging capacitor Cp is alternately connected to one of the unit cells CLp and CLp+1 adjacent to each other.

Gates (control terminals) of the FETs Q21 of the n FET pairs 51 to 5n are connected in common through later-described level shift circuits 61 to 6n and further connected to the microcomputer 3. Moreover, gates of the FETs Q22 of the n FET pairs 51 to 5n are connected in common through later-described level shift circuits 71 to 7n and further connected to the microcomputer 3. Gates of the n FETs Q11 to Q1n are connected to the microcomputer 3 through later-described level shift circuits 81 to 8n.

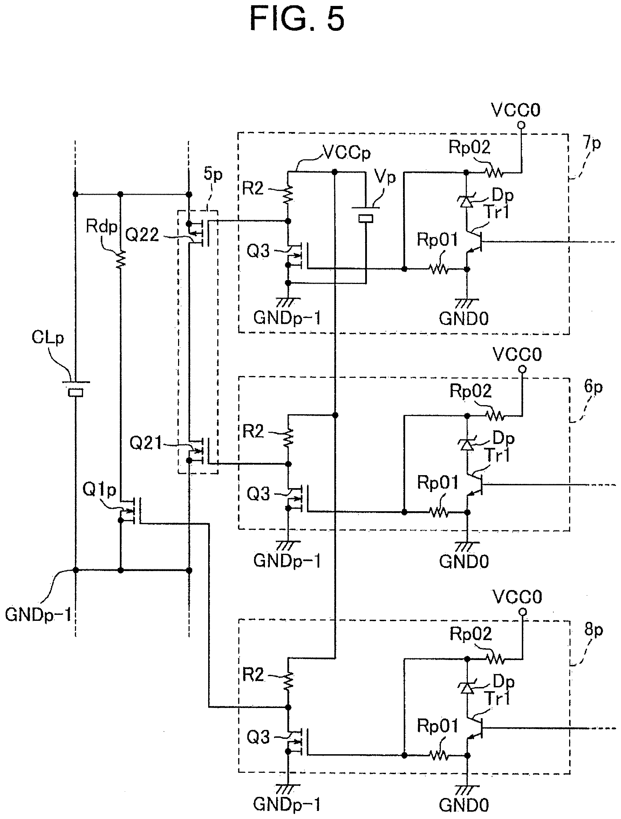

The n level shift circuits 61 to 6n are provided in accordance with the respective FET pairs 51 to 5n. As shown in FIG. 2 and FIG. 5, the respective level shift circuits 61 to 6n are composed of FETs Q3 that are N channels, resistors R2, NPN type transistors Tr1, resistors R101 to Rn01 and resistors R102 to Rn02, and zener diodes D2 to Dn (which are not included in the level shift circuit 61).

Giving a description on a representative arbitrary level shift circuit 6p (p is an arbitrary integer meeting 2≤p≤n), the FET Q3 has a drain connected to a positive side of a power supply Vp (see FIG. 5) different from the unit cells CL1 to CLn through the resistor R2, a source connected to a ground GNDp-1 that is a negative potential of the corresponding unit cell CLp, and a gate connected to a ground GND0 of the lowest-order unit cell CL1 and an emitter of the later-described transistor Tr1 through a resistor Rp01. The different power supply Vp is a power supply different from the unit cells CL1 to CLn or the power supply 8, the n power supplies Vp are provided in accordance with the respective level shift circuits 61 to 6n. Additionally, a connecting point of the resistor R2 and the FET Q3 is connected to a gate of the FET Q21 constituting the FET pair 5p.

The transistor Tr1 has an emitter connected to the ground GND0 of the lowest-order unit cell CL1 and a collector connected to a power supply Vcc0 through a zener diode Dp and a resistor Rp02. It is to be noted that, in the level shift circuit 61, a collector of the transistor Tr1 is connected to the power supply Vcc0 through the resistor Rp02 alone without using the zener diode Dp. Further, a base of the transistor Tr1 is connected to the microcomputer 3. The power supply Vcc0 is a power supply different from the unit cells CL1 to CLn or the power supply 8, and it is connected to the respective level shift circuits 61 to 6n in common. Furthermore, a connecting point of the FET Q3 and the resistor Rp01 is connected to a connecting point of the zener diode Dp and the resistor Rp02. In the level shift circuit 61, a connecting point of the FET Q3 and the resistor R101 is connected to a connecting point of the transistor Tr1 and the resistor R102.

Operations of the level shift circuits 61 to 6n will now be described. Consideration will be first given as to the level shift circuit 61. When a signal of an L level (e.g., 0 V) is supplied to the base of the transistor Tr1 from the microcomputer 3, the transistor Tr1 is turned off. When the transistor Tr1 is turned off, a divided voltage obtained by dividing the power supply Vcc0 by the resistor R102 and the resistor R101 is supplied to the gate of the FET Q3. Since each of the resistor R102 and the resistor R101 is set in such a manner that its divided voltage becomes higher than the source (=GND0) of the FET Q3, the FET Q3 is turned on. When the FET Q3 is turned on, since the ground GND0 is supplied to the gate of the FET Q21, a potential difference is no longer produced between the gate and the source of the FET Q21, and the FET Q21 is turned off.

On the other hand, when a signal of an H level (e.g., 5 V) is supplied to the base of the transistor Tr1 from the microcomputer 3, the transistor Tr1 is turned on. When the transistor Tr1 is turned on, in the level shift circuit 61, the ground GND0 is supplied to the gate of the FET Q3, a potential difference is no longer produced between the gate and the source of the FET Q3, and the FET Q3 is turned off. When the FET Q3 is turned off, a positive potential Vcc1 of the different power supply V1 is supplied to the gate of the FET Q21, the gate of the FET Q21 becomes higher than the source of the same, and the FET Q21 is turned on.

An arbitrary level shift circuit 6p (2≤p≤n) will now be considered. When a signal of the L level is supplied to the base of the transistor Tr1 from the microcomputer 3, the transistor Tr1 is turned off. When the transistor Tr1 is turned off, a divided voltage obtained by dividing the power supply Vcc0 by the resistor Rp02 and the resistor Rp01 is supplied to the gate of the FET Q3. Since each of the resistor Rp02 and the resistor Rip01 is set in such a manner that its divided voltage becomes higher than the source (=GNDp-1) of the FET Q3, the FET Q3 is turned on. When the FET Q3 is turned on, since the GNDp-1 is supplied to the gate of the FET Q21, a potential difference between the gate and the source of the FET Q21 is eliminated, and the FET Q21 is turned off.

On the other hand, when a signal of the H level is supplied to the base of the transistor Tr1 from the microcomputer 3, the transistor Tr1 is turned on. When the transistor Tr1 is turned on, the gate of the FET Q3 is lowered to a zener voltage of the zener diode Dp. Since the zener diode Dp is set in such a manner that its zener voltage becomes a voltage slightly lower than the source of the FET Q3, a potential difference between the gate and the source of the FET Q3 is eliminated, and the FET Q3 is turned off. When the FET Q3 is turned off, the positive potential Vcc1 of the different power supply V1 is supplied to the gate of the FET Q21, the gate of the FET Q21 becomes higher than the source of the same, and the FET Q21 is turned on.

It is to be noted that the zener diode Dp is provided between the resistor Rp02 and the transistor Tr1 in the example shown in FIG. 2, but the present invention is not limited thereto, and a resistor may be used in place of the zener diode Dp, for example.

The n level shift circuits 71 to 7n are provided in accordance with the respective FET pairs 51 to 5n. As shown in FIG. 2 and FIG. 5, the respective level shift circuits 71 to 7n are composed of the FETs Q3 that are N channels, resistors R2, NPN transistors Tr1, resistors R101 to Rn01 and resistors R102 to Rn02, and zener diodes D2 to Dn (which are not included in the level shift circuit 71) like the level shift circuits 61 to 6n. Since the level shift circuits 71 to 7n have the same configurations as the level shift circuits 61 to 6n, a detailed description thereof will be omitted here.

Operations of the level shift circuits 71 to 7n will now be explained. An arbitrary level shift circuit 7p will be first considered. When a signal of the L level is supplied to a base of the transistor Tr1 from the microcomputer 3, the FET Q3 is turned on like the level shift circuits 61 to 6n. When the FET Q3 is turned on, negative GNDp-1 of the unit cell CLp is supplied to a gate of the FET Q22, and hence the FET Q22 is turned on. On the other hand, when a signal of the H level is supplied to the base of the transistor Tr1 from the microcomputer 3, the FET Q3 is turned off like the level shift circuits 61 to 6n. When the FET Q3 is turned off, a positive potential Vcc1 of the different power supply Vp is supplied to the gate of the FET Q22, and hence the FET Q22 is turned off.

The n level shift circuits 81 to 8n are provided in accordance with the respective FETs Q11 to Q15n. As shown in FIG. 2 and FIG. 5, the respective level shift circuits 81 to 8n are composed of FETs Q3 of N channels, resistors R2, NPN transistors Tr1, resistors R101 to Rn01 and resistors R102 to Rn02, and zener diodes D2 to Dn (which are not included in the level shift circuit 71) like the level shift circuits 61 to 6n. Since the level shift circuits 71 to 7n have the same configurations as the level shift circuits 61 to 6n, a detailed description thereof will be omitted here. Operations of the level shift circuits 81 to 8n are the same as those of the level shift circuits 61 to 6n, the FET Q1p is turned on when a signal of the L level is supplied to a base of the transistor Tr1 from the microcomputer 3, and the FET Q1p is turned off when a signal of the H level is supplied.

The microcomputer 3 is composed of a well-known microcomputer, and it operates upon receiving power from the power supply 8 different from the high-voltage battery BH. The ground GND0 of this microcomputer 3 is connected to the ground GND0 of the high-voltage battery BH.

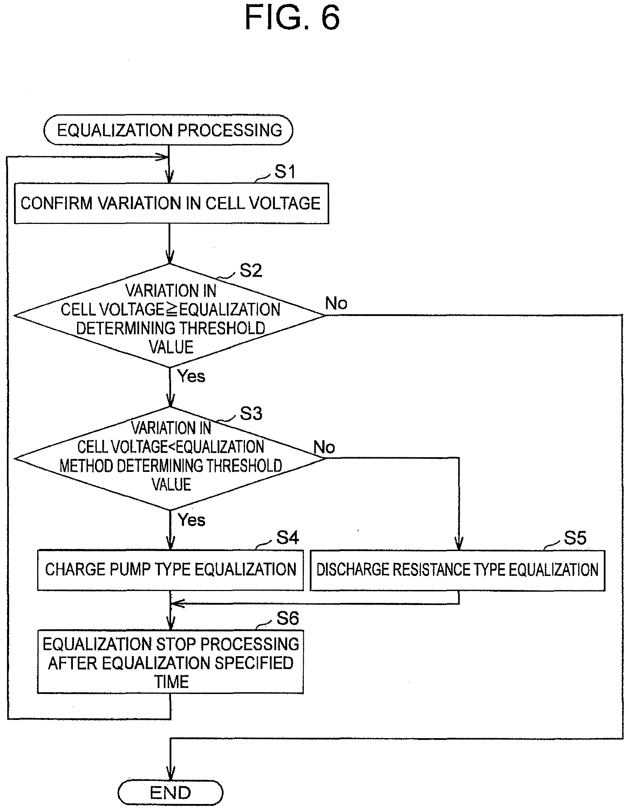

An operation of the thus configured equalization device 1 will now be described with reference to FIG. 6.

When the microcomputer 3 itself determines that equalization is required or when an equalization command is output from a non-illustrated host in accordance with a trigger such as ON/OFF of an ignition switch, the microcomputer 3 starts an equalizing operation. First, the microcomputer 3 takes in both-end voltages of the capacitors Cd1 to Cdn supplied from the voltage detection circuit 21 and detects a variation in the respective unit cells CL1 to CLn (a step S1). As described above, the both-end voltages of the unit cells CL1 to CLn divided through the filters (formed of the resistors R11 to R1n and the capacitors Cd1 to Cdn) are input to the microcomputer 3 from the voltage detection circuit 21. At the step S1, the microcomputer 3 calculates the both-end voltages of the unit cells CL1 to CLn from voltages input from this voltage detection circuit 21 based on an arithmetic operation and obtains the variation. Here, as the variation, for example, a difference between a maximum value and a minimum value of the both-end voltages of the unit cells CL1 to CLn, a standard deviation of the both-end voltages of the unit cells CL1 to CLn, or the like can be envisioned.

Then, the microcomputer 3 functions as equalization determiner and determines whether the equalization must be carried out based on the obtained variation (a step S2). When the microcomputer 3 determines that the variation is less than an equalization determining threshold value and the equalization does not have to be carried out (No at the step S2), it immediately terminates equalization processing. On the other hand, when the microcomputer 3 determines that the variation is equal to or greater than the equalization determining threshold value and the equalization must be performed (Yes at the step S2), it then functions as equalization selector and determines whether the obtained variation is less than an equalization method determining threshold value (a prescribed value) (a step S3).

When the variation is smaller than the equalization method determining value (Yes at the step S3), the microcomputer 3 proceeds to a step S4 and executes the charge pump type equalization (the step S4). At this step S4, the microcomputer 3 functions as second equalizer and outputs, e.g., a pulse signal of 5 V on the H level or 0V on the L level to the transistors Tr1 of the level shift circuits 61 to 6n and 71 to 7n. When this pulse signal is subjected to level shift in the respective level shift circuits 61 to 6n and 71 to 7n and alternately supplied as an ON signal to the gates of the FETs Q21 and Q22, and the FETs Q21 and Q22 are alternately turned on. When the FETs Q21 an Q22 are alternately turned on, each capacitor CLp is alternately connected to one and the other of the unit cells CLp and CLp+1 adjacent to each other as shown in FIG. 4(A) and (B), and the unit cells CL1 to CLn are equalized.

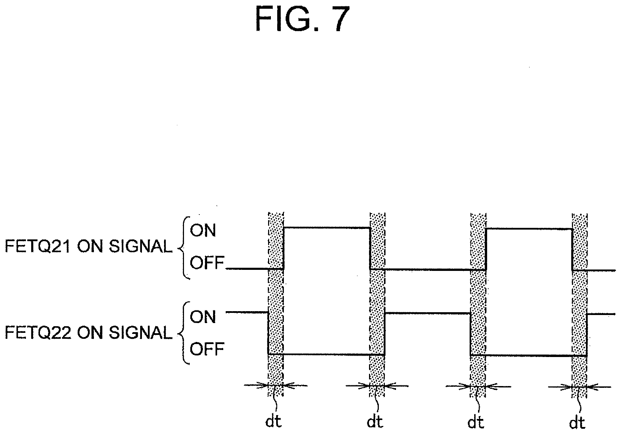

At this time, as shown in FIG. 7, a dead time dt can be provided to an ON signal that is used for turning on the FET Q21 and an ON signal that is used for turning on the FET Q22 so that the FETs Q21 and Q22 are not turned on at the same time.

On the other hand, when the variation is equal to or greater than the equalization method determining threshold value (No at the step S3), the microcomputer 3 proceeds to a step S5 and executes the discharge resistance type equalization (the step S5). At this step S5, the microcomputer 3 functions as first equalizer, sets a threshold value determined by the plurality of both-end voltages (for example, an average value of the unit cells CL1 to CLn is set as the threshold value), and outputs a signal of the L level to the transistors Tr1 of the level shift circuits 81 to 8n corresponding to the unit cells CL1 to CLn that provide the both-end voltages which are greater than or equal to this threshold value. This signal is subjected to level shift in the level shift circuits 81 to 8n and supplied to the gates of the FETs Q11 to Q1n, and the FETs Q11 to Q1n are turned on. As a result, all the unit cells CL1 to CLn whose both-end voltages are greater than or equal to the threshold value are subjected to discharging with the use of the discharge resistors Rd1 to Rdn. The unit cells CL1 to CLn whose both-end voltages are less than the threshold value are not subjected to the discharging.

Subsequently, when a predetermined equalization prescribed time elapses after execution of the equalization at the step S4 or S5, the microcomputer 3 outputs a signal of the H level to the transistors Tr1 in the level shift circuits 61 to 6n and 81 to 8n and a signal of the L level to the transistors Tr1 in the level shift circuits 71 to 7n, turns off the FETs Q11 to Q1n and the FETs Q21 and Q22 of the FET pairs 51 to 5n to stop the equalization (the step S5), then advances to the step S1, again detects both-end voltages of the unit cells CL1 to CLn with the use of the voltage detection circuit 21, and determines whether the equalization must be again performed based on a detected variation in both-end voltages.

According to the foregoing embodiment, since the microcomputer 3 selects the discharge resistance type and executes the equalization when a variation in both-end voltages of the unit cells CL1 to CLn is equal to or greater than the equalization method determining threshold value or selects the charge pump type and executes the equalization when the same is smaller than the equalization method determining threshold value, the equalization can be highly accurately carried out with the use of the charging capacitors C1 to Cp after rapidly reducing the variation in both-end voltages of the unit cells CL1 to CLn by using the discharge resistors Rd1 to Rdn when the variation is large, and hence the equalization can be performed rapidly with high accuracy.

Further, according to the foregoing embodiment, in the discharge resistance type equalization, since the microcomputer 3 connects all the unit cells, whose both-end voltages detected by the voltage detection circuit 21 are equal to or greater than the threshold value determined based on the plurality of both-end voltages in the unit cells CL1 to CLn, to the discharge resistors Rd1 to Rdn, the variation can be further rapidly reduced.

Furthermore, according to the foregoing embodiment, in the charge pump type equalization, since the microcomputer 3 turns on or off the FET pairs 51 to 5n in such a manner that both poles of each of the charging capacitors C1 to Cn-1 are sequentially connected to two neighboring unit cells in the unit cells CL1 to CLn from a lower order to a higher order or from the higher order to the lower order, electric charges are moved by using the plurality of charging capacitors C1 to Cn-1, and hence the equalization can be rapidly carried out. Moreover, since the equalization can be performed without detecting voltages, the equalization can be executed even during traveling or stopping of a vehicle (when the ignition switch is ON).

Additionally, according to the foregoing embodiment, since the level shift circuits 61 to 6n, 71 to 7n, and 81 to 8n that drive the FET pairs 51 to 5n and the FETs Q11 to Q1n to be turned on/off operate upon receiving power from the different power supplies V1 to Vn, which are power supplies different from the unit cells CL1 to CLn, and the power supply Vcc0, the power is not taken out of the unit cells CL1 to CLn to drive the level shift circuits 61 to 6n, 71 to 7n, and 81 to 8n, and hence the equalization can be executed without wasting capacities of the unit cells CL1 to CLn. Further, a cause of a variation in both-end voltages of the unit cells CL1 to CLn can be eliminated.

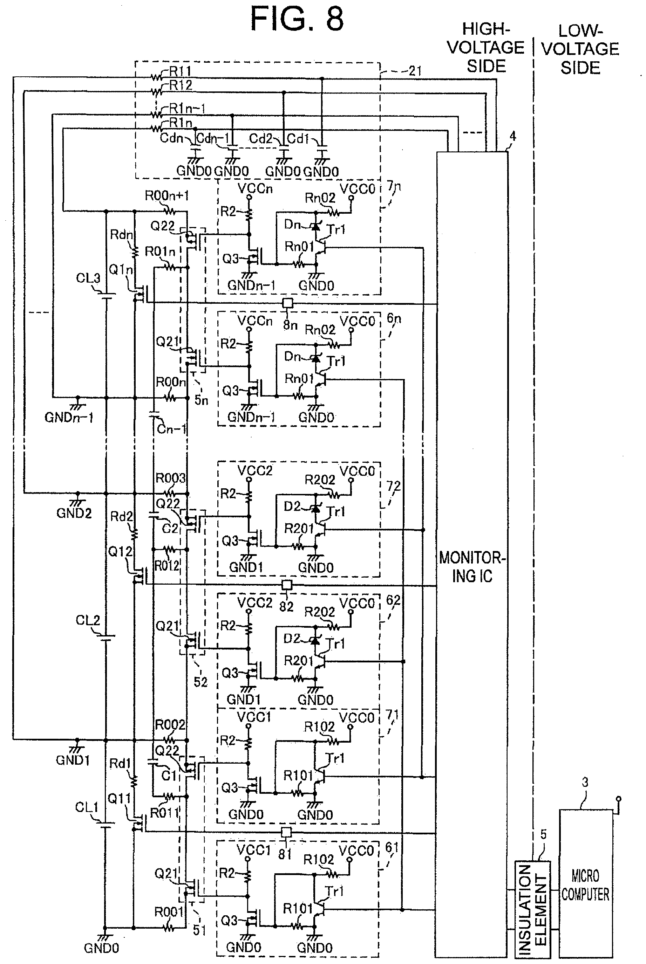

It is to be noted that, according to the foregoing embodiment, an output from the voltage detection circuit 21 is directly supplied to the microcomputer 3, and the microcomputer 3 directly supplies signals to the level shift circuits 61 to 6n, 71 to 7n, and 81 to 8n, but the present invention is not limited thereto. For example, in case of insulating the microcomputer 3 from the unit cells CL1 to CLn, as shown in FIG. 8, a monitoring IC 4 that can communicate with the microcomputer 3 through an insulation element 5 may be provided, and a circuit that inputs an output from the voltage detection circuit 21 or outputs both-end voltages of the unit cells CL1 to CLn or the level shift circuits 61 to 6n, 71 to 7n, and 81 to 8n may be included in the monitoring IC 4. In this case, both-end voltages of the capacitors Cd1 to Cdn can be directly supplied to the monitoring IC 4. Further, when the level shift circuits 61 to 6n, 71 to 7n, and 81 to 8n are included in the monitoring IC 4 as described above, the discharge resistance type equalization or the charge pump type equalization can be carried out with ease.

Furthermore, according to the foregoing embodiment, although the FET Q21, FET Q22, and FET Q11 to Q1n are used as the first switch and the second switch, the present invention is not limited thereto. As each of the first switch and the second switch, for example, a photo-switch or the like can be used, and the level shift circuits 61 to 6n, 71 to 7n, and 81 to 8n are not required when the photo-switch is used.

Moreover, according to the foregoing embodiment, the microcomputer 3 is connected to the FETs Q21 and Q22 of each of the FET pairs 51 to 5n through two signal lines, but the present invention is not limited thereto. Additionally, common connection may be made between the gate of the FET Q21 and the gate of the FET Q22, and these members may be connected through one signal line.

Additionally, according to the foregoing embodiment, the FET Q21 and FET Q22 are switched on/off at the same time, but the present invention is not limited thereto. When the FETs Q21 and Q22 are switched on/off at the same time, the unit cells CL1 to CLn are short-circuited and cannot properly operate in some situations, and hence the FET Q22 may be switched on from the off state a little after switching the FET Q21 to OFF from ON, and the FET Q21 may be switched on from the off state slightly after switching the FET Q22 from ON to OFF. To make a delay, there are a method for making a delay on control software and a method for making a delay in hardware design. According to the method for making a delay on the control software, a signal output from the microcomputer 3 is delayed. According to the method for making a delay in the hardware design, installing a capacitor on a signal line drawn from the microcomputer 3 is applicable. For example, connecting a capacitor to a point before the gate of one of the FETs Q21 and Q22 that needs to be delayed can be utilized.

Further, according to the foregoing embodiment, although the respective level shift circuits 61 to 6n, 71 to 7n, and 81 to 8n operate upon receiving power from the n different power supplies V1 to Vn, which are different from the unit cells CL 1 to CLn, and the power supply Vcc0, but the present invention is not limited thereto. They may operate upon receiving power from the unit cells CL1 to CLn.

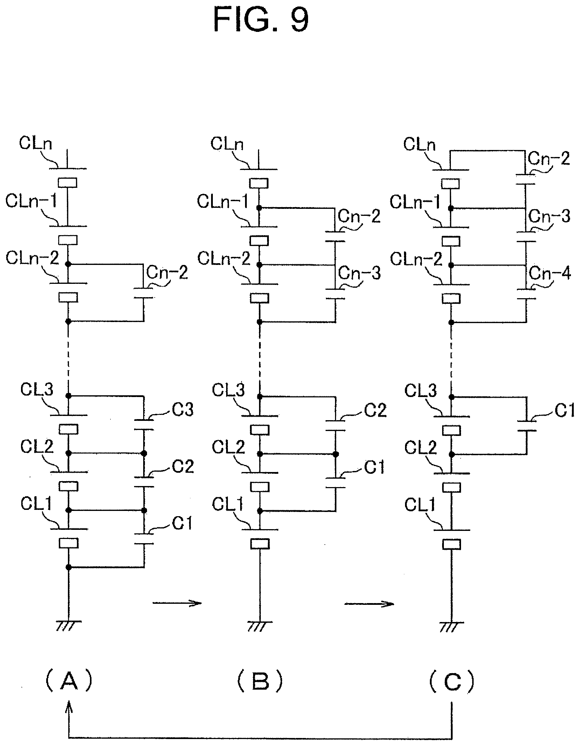

Furthermore, according to the foregoing embodiment, although the equalization is performed with the use of the n-1 charging capacitors C1 to Cn-1, the present invention is not limited thereto. The single charging capacitor alone may be provided, and it may be sequentially connected to all the unit cells CL1 to CLn. Moreover, the number m of the charging capacitors may be 2≤m≤n-1. For example, a situation where the equalization is performed with the use of n-2 charging capacitors C1 to Cn-2 will now be described with reference to FIG. 9.

At this time, as shown in FIG. 9(A) to (C), a non-illustrated changeover switch section is provided so that both poles of an arbitrary charging capacitor Cp are sequentially connected to three unit cells CLp, CLp+1, and CLp+2 that are adjacent to each other. Additionally, the microcomputer 3 turns on/off the non-illustrated changeover switch section so that both the poles of the charging capacitor Cp can be sequentially connected to the three unit cells CLp, CLp+1, and CLp+2 that are adjacent to each other from the lower order to the higher order or from the higher order to the lower order. Likewise, in case of performing the equalization with the use of, e.g., m charging capacitors C1 to Cm, a non-illustrated changeover switch section is provided so that both ends of an arbitrary charging capacitor Cp can be sequentially connected to (n-m+1) unit sells CLp to CLp+(n-m+1) adjacent to each other from the lower order to the higher order or from the higher order to the lower order, and the changeover switch section is turned on/off so that the microcomputer 3 can sequentially connect both poles of a charging capacitor Cp to the (n-m+1) unit cells CLp to CLp+(n-m+1) adjacent to each other from the lower order to the higher order or from the higher order to the lower order. At this time, the lowest order of the (n-m+1) unit cells connected with the respective charging capacitors C1 to Cm is unit cells that are different from each other.

Further, in the foregoing embodiment, the equalization is not performed when a variation in both-end voltages of the unit cells CL1 to CLn is less than the equalization determining threshold value during the ignition OFF, and the equalization is performed when the same is equal to or greater than the equalization determining threshold value, but the present invention is not limited thereto. For example, those cases can also be taken into consideration that the charge pump type equalization is always operated without detecting both-end voltages of the unit cells CL1 to CLn during traveling (the ignition ON) of a vehicle in which the both-end voltages of the unit cells CL 1 to CLn are not stable or during charging/discharging period of the unit cells CL1 to CLn, and that during the ignition OFF or non-charging/non-discharging of the unit cells CL1 to CLn, the both-end voltages of the unit cells CL 1 to CLn are detected in a state that the unit cells CL1 to CLn are stable and if a variation is greater than the equalization method determining value, the unit cells CL1 to CLn are discharged.

Furthermore, in the embodiment shown in FIG. 2 or FIG. 7, the capacitors Cd1 to Cdn constituting the voltage detection circuit 21 are provided between the circuit and the ground GND0, but they may be provided between the circuit and the unit cells CL1 to CLn.

Moreover, the foregoing embodiment has been just described as a typical mode of the present invention, and the present invention is not limited to the embodiment. That is, the present invention can be modified and embodied in many ways without departing from the gist thereof.

### REFERENCE SIGNS LIST

1 equalization device
3 microcomputer (first equalizer, second equalizer, equalization selector, equalization determiner)
21 voltage detection circuit (voltage detector)
61 to 6n level shift circuit (drive circuit)
71 to 7n level shift circuit (drive circuit)
81 to 8n level shift circuit (drive circuit)
C 1 to Cn-1 charging capacitor
CL1 to CLn unit cell
Q11 to Q1n FET (first switch)
Q21 FET (second switch)
Q22 FET (second switch)
Rd1 to Rdn discharge resistor
Vcc0 power supply (different power supply)
Vp different power supply

## Claims

1. An equalization device that equalizes both-end voltages of a plurality of unit cells (CL1...CLn) connected to each other in series, comprising:
a voltage detector (21) for detecting the both-end voltages of the unit cells (CL1...CLn), respectively;
a discharge resistor (Rd1...Rdn);
a plurality of first switches (Q11...Q1 n) that connect the unit cells (CL1...CLn) to the discharge resistor (Rd1...Rdn), respectively; and
a first equalizer (3) for executing equalization by controlling the first switches (Q11...Q1n) and connecting each unit cell having a high both-end voltage in the unit cells (CL1...CLn) to the discharge resistor (Rd1...Rdn) to perform discharge;
**characterized by**
a charging capacitor (C1...Cn-1);
a plurality of second switches (Q21, Q22) that sequentially connect the charging capacitor (C1...Cn-1) to the respective unit cells (CL1...CLn);
a second equalizer (3) for executing the equalization by controlling the second switches (Q21, Q22) and sequentially connecting the charging capacitor (C1...Cn-1) to the respective unit cells (CL1...CLn); and
an equalization selector (3) adapted for selecting the first equalizer (3) to execute a first equalization process when a variation in both-end voltages of the unit cells (CL1...CLn) is equal to or greater than a prescribed value and for selecting the second equalizer (3) to execute a second equalization process following the first equalization process when the variation has become smaller than the prescribed value.

2. The equalization device according to claim 1, further comprising equalization determiner (3) for determining whether the equalization must be executed based on the variation in both-end voltages of the respective unit cells (CL1...CLn) detected by the voltage detector (21),
wherein the equalization selector (3) selects equalizer to execute the equalization every time the equalization determiners (3) determines that the equalization is required, and
the equalization determiner (3) again detects the both-end voltages of the unit cells (CL1...CLn) with the use of the voltage detector (21) and again performs the determination based on a variation in the detected both-end voltages after end of the equalization executed by the equalizer selected by the equalization selector (3).

3. The equalization device according to claim 1 or 2, wherein the equalization selector (3) is further adapted for selecting the second equalizer (3) to execute the equalization during a period in which an ignition of a vehicle having the device mounted therein is an ON position or during charging/discharging of the unit cells (CL1...CLn) and for selecting either one of the first equalizer (3) and the second equalizer (3) based on the variation in both-end voltages of the unit cells (CL1...CLn) during a period in which the ignition switch of the vehicle is an OFF position or during non-discharging/non-charging of the unit cells (CL1...CLn).

4. The equalization device according to any one of claims 1 to 3, wherein the first equalizer (3) connects all units cells, whose both-end voltages detected by the voltage detector (21) are equal to or greater than a threshold value determined based on the plurality of both-end voltages, to the discharge resistor (Rd1...Rdn).

5. The equalization device according to any one of claims 1 to 4,
wherein the n, n>=3, unit cells (CL1...CLn) are provided,
m, 2<=m<=n-1, charging capacitors (C1...Cn-1) are provided,
the second switches (Q21, Q22) are provided in such a manner that both poles of each charging capacitor (C1...Cn-1) are sequentially connected to n-m+1 unit cells (CL1 ... CLn) adjacent to each other,
the second equalizer (3) turns on/off the second switches (Q21, Q22) so that both the poles of each charging capacitor (C1...Cn-1) are sequentially and repeatedly connected to the n-m+1 unit cells (CL1...CLn) adjacent to each other from a lower order to a higher order or from the higher order to the lower order, and
the lowest order of the n-m+1 unit cells (CL1...CLn) connected with each charging capacitor (C1...Cn-1) is unit cells (CL1...CLn) different from each other.

6. The equalization device according to any one of claims 1 to 5, wherein a drive circuit that drives the first switches (Q11...Q1n) and the second switches (Q21, Q22) to be turned on/off operates upon receiving power from a power supply different from the unit cells (CL1...CLn).

## Patentansprüche

1. Ausgleichsvorrichtung, welche die Spannungen an beiden Enden einer Vielzahl von Einheitszellen (CL1...CLn) ausgleicht, die miteinander in Reihe geschaltet sind, umfassend:
einen Spannungsdetektor (21) zum jeweiligen Ermitteln der Spannungen an beiden Enden der Einheitszellen (CL1...CLn);
einen Entladewiderstand (Rd1...Rdn);
eine Vielzahl von ersten Schaltern (Q11...Q1n), welche die Einheitszellen (CL1...CLn) mit dem jeweiligen Entladewiderstand (Rd1...Rdn) verbinden; und
einen ersten Ausgleicher (3) zum Ausführen des Ausgleichs durch Steuern der ersten Schalter (Q11... Q1n) und Verbinden der einzelnen Einheitszellen, die eine hohe Spannung an beiden Enden aufweisen in den Einheitszellen (CL1...CLn) mit dem Entladewiderstand (Rd1... Rdn), um Entladung durchzuführen;
**gekennzeichnet durch**
einen Ladekondensator (C1... Cn-1);
eine Vielzahl von zweiten Schaltern (Q21, Q22), welche den Ladekondensator (C1...Cn-1) sequenziell mit den jeweiligen Einheitszellen (CL1...CLn) verbinden;
einen zweiten Ausgleicher (3) zum Ausführen des Ausgleichs durch Steuern der zweiten Schalter (Q21, Q22) und durch sequenzielles Verbinden des Ladekondensators (C1...Cn-1) mit den jeweiligen Einheitszellen (CL1...CLn); und
einen Ausgleichsselektor (3), der zum Auswählen des ersten Ausgleichers (3) eingerichtet ist, um einen ersten Ausgleichsprozess durchzuführen, wenn eine Abweichung in den Spannungen an den beiden Enden der Einheitszellen (CL1...CLn) gleich oder größer als ein vorgeschriebener Wert ist, und zum Auswählen des zweiten Ausgleichers (3), um einen zweiten Ausgleichsprozess in Folge auf den ersten Ausgleichsprozess durchzuführen, wenn die Abweichung kleiner als der vorgeschriebene Wert wird.

2. Ausgleichsvorrichtung nach Anspruch 1, des Weiteren umfassend einen Ausgleichsbestimmer (3) zum Bestimmen, ob der Ausgleich durchgeführt werden muss, basierend auf der Abweichung in den Spannungen an beiden Enden der jeweiligen Einheitszellen (CL1...CLn), die von dem Spannungsdetektor (21) ermittelt werden,
wobei der Ausgleichsselektor (3) den Ausgleicher zur Ausführung des Ausgleichs jedes Mal dann auswählt, wenn der Ausgleichsbestimmer (3) bestimmt, dass der Ausgleich erforderlich ist, und
der Ausgleichsbestimmer (3) erneut die Spannungen an beiden Enden der Einheitszellen (CL1... CLn) unter Verwendung des Spannungsdetektors (21) ermittelt und erneut die Bestimmung basierend auf einer Abweichung in den ermittelten Spannungen an beiden Enden nach Beendigung des Ausgleichs durchführt, der von dem Ausgleich durchgeführt wird, der von dem Ausgleichsselektor (3) ausgewählt wird.

3. Ausgleichsvorrichtung nach Anspruch 1 oder 2, wobei der Ausgleichsselektor (3) des Weiteren zum Auswählen des zweiten Ausgleichers (3) eingerichtet ist, um den Ausgleich während einer Periode durchzuführen, in dem die Zündung eines Fahrzeugs, in welchem die Vorrichtung montiert ist, sich in der AN-Stellung befindet, oder während des Ladens/Entladens der Einheitszellen (CL1...CLn), und zum Auswählen von einem aus dem ersten Ausgleicher (3) und dem zweiten Ausgleicher (3) basierend auf der Abweichung in den Spannungen an beiden Enden der Einheitszellen (CL1...CLn) während einer Periode, in der sich der Zündschalter des Fahrzeugs in einer AUS-Stellung befindet oder während des Nicht-Ladens/Nicht-Entladens der Einheitszellen (CL1...CLn).

4. Ausgleichsvorrichtung nach einem der Ansprüche 1 bis 3, wobei der erste Ausgleicher (3) alle Zellen, deren von dem Spannungsdetektor (21) ermittelte Spannungen an beiden Enden gleich oder größer als ein Schwellenwert sind, der basierend auf der Vielzahl der Spannungen an beiden Enden bestimmt wird, mit dem Entladewiderstand (Rd1...Rdn) verbindet.

5. Ausgleichsvorrichtung nach einem der Ansprüche 1 bis 4,
wobei die n, n >= 3, Einheitszellen (CL1...CLn) vorgesehen sind,
m, 2 <= m <= n-1, Ladekondensatoren (C1...Cn-1) vorgesehen sind,
die zweiten Schalter (Q21, Q22) solcher Art angeordnet sind, dass beide Pole der einzelnen Ladekondensatoren (C1...Cn-1) sequenziell mit n-m+1 Einheitszellen (CL1 ...CLn) nebeneinander verbunden sind,
der zweite Ausgleicher (3) die zweiten Schalter (Q21, Q22) so ein-/ausschaltet, dass beide Pole der einzelnen Ladekondensatoren (C1...Cn-1) sequenziell und wiederholt mit den n-m+1 Einheitszellen (CL1...CLn) nebeneinander von einer niedrigeren Ordnung zu einer höheren Ordnung oder von der höheren Ordnung zu der niedrigeren Ordnung verbunden werden, und
die niedrigste Ordnung der n-m+1 Einheitszellen (CL1...CLn), die mit den einzelnen Ladekondensatoren (C1...Cn-1) verbunden sind, unterschiedliche Einheitszellen (CL1... CLn) sind.

6. Ausgleichsvorrichtung nach einem der Ansprüche 1 bis 5, wobei eine Steuerschaltung, welche die ersten Schalter (Q11...Q1n) und die zweiten Schalter (Q21, Q22) zum Ein-/Ausschalten ansteuert, bei Empfang von Strom von einer anderen Stromversorgung als den Einheitszellen (CL1...CLn) arbeitet.

## Revendications

1. Dispositif d'égalisation qui égalise les tensions aux deux extrémités d'une pluralité de cellules unitaires (CL1 ... CLn) connectées les unes aux autres en série, comprenant:
un détecteur de tension (21) permettant de détecter les tensions aux deux extrémités des cellules unitaires (CL1 ... CLn), respectivement;
une résistance de décharge (Rd1 ... Rdn);
une pluralité de premiers interrupteurs (Q11 ... Q1 n) qui connectent les cellules unitaires (CL1 ... CLn) à la résistance de décharge (Rd1 ... Rdn), respectivement; et
un premier égaliseur (3) pour exécuter l'égalisation en commandant les premiers interrupteurs (Q11 ... Q1n) et en connectant chaque cellule unitaire ayant une tension élevée aux deux extrémités dans les cellules unitaires (CL1 ... CLn) à la résistance de décharge (Rd1 ... Rdn) pour effectuer la décharge;
**caractérisé par**
un condensateur de charge (C1 ... Cn-1);
une pluralité de seconds interrupteurs (Q21, Q22) qui connectent séquentiellement le condensateur de charge (C1 ... Cn-1) aux cellules unitaires respectives (CL1 ... CLn);
un second égaliseur (3) permettant d'exécuter l'égalisation en commandant les seconds interrupteurs (Q21, Q22) et de connecter séquentiellement le condensateur de charge (C1 ... Cn-1) aux cellules unitaires respectives (CL1 ... CLn); et
un sélecteur d'égalisation (3) prévu pour sélectionner le premier égaliseur (3) afin d'exécuter un premier processus d'égalisation lorsqu'une variation des tensions aux deux extrémités des cellules unitaires (CL1 ... CLn) est supérieure ou égale à une valeur prescrite et pour sélectionner le second égaliseur (3) afin d'exécuter un second processus d'égalisation après le premier processus d'égalisation lorsque la variation est devenue inférieure à la valeur prescrite.

2. Dispositif d'égalisation selon la revendication 1, comprenant en outre un déterminant d'égalisation (3) permettant de déterminer si l'égalisation doit être exécutée en fonction de la variation des tensions aux deux extrémités des cellules unitaires respectives (CL1 ... CLn) détectées par le détecteur de tension (21),
dans lequel le sélecteur d'égalisation (3) sélectionne l'égaliseur afin d'exécuter l'égalisation à chaque fois que les déterminants d'égalisation (3) déterminent que l'égalisation est nécessaire, et
le déterminant d'égalisation (3) détecte de nouveau les tensions aux deux extrémités des cellules unitaires (CL1 ... CLn) à l'aide du détecteur de tension (21) et effectue à nouveau la détermination en fonction d'une variation des tensions aux deux extrémités détectées à la fin de l'égalisation exécutée par l'égaliseur sélectionné par le sélecteur d'égalisation (3).

3. Dispositif d'égalisation selon les revendications 1 ou 2, dans lequel le sélecteur d'égalisation (3) est en outre prévu pour sélectionner le second égaliseur (3) afin d'exécuter l'égalisation pendant une période au cours de laquelle l'allumage d'un véhicule comportant le dispositif monté à l'intérieur est en position MARCHE ou pendant le chargement/déchargement des cellules unitaires (CL1 ... CLn) et pour sélectionner l'un du premier égaliseur (3) et du second égaliseur (3) en fonction de la variation des tensions aux deux extrémités des cellules unitaires (CL1 ... CLn) pendant une période au cours de laquelle l'interrupteur d'allumage du véhicule est en position ARRET ou pendant le non-déchargement/le non-chargement des cellules unitaires (CL1 ... CLn).

4. Dispositif d'égalisation selon l'une quelconque des revendications 1 à 3, dans lequel le premier égaliseur (3) connecte toutes les cellules unitaires, dont les tensions aux deux extrémités détectées par le détecteur de tension (21) sont supérieures ou égales à une valeur de seuil déterminée en fonction de la pluralité des tensions aux deux extrémités, à la résistance de décharge (Rd1 ... Rdn).

5. * Dispositif d'égalisation selon l'une quelconque des revendications 1 à 4,
dans lequel les n, n ≥ 3, cellules unitaires (CL1 ... CLn) sont fournies,
les m, 2 ≤ m ≤ n-1, condensateurs de charge (C1 ... Cn-1) sont fournis,
les seconds interrupteurs (Q21, Q22) sont prévus de telle manière que les deux pôles de chaque condensateur de charge (C1 ... Cn-1) soient connectés séquentiellement aux n-m+1 cellules unitaires (CL1 ... CLn) adjacentes les unes des autres,
le second égaliseur (3) active/désactive les seconds interrupteurs (Q21, Q22) de sorte que les deux pôles de chaque condensateur de charge (C1 ... Cn-1) sont connectés de manière séquentielle et à plusieurs reprises aux n-m+1 cellules unitaires (CL1 ... CLn) adjacentes les unes des autres, d'un ordre inférieur à un ordre supérieur ou bien d'un ordre supérieur à l'ordre inférieur, et l'ordre le plus bas des n-m+1 cellules unitaires (CL1 ... CLn) connectées à chaque condensateur de charge (C1 ... Cn-1) correspond à des cellules unitaires (CL1 ... CLn) différentes les unes des autres.

6. Dispositif d'égalisation selon l'une quelconque des revendications 1 à 5, dans lequel un circuit de commande qui entraîne les premiers interrupteurs (Q11 ... Q1n) et les seconds interrupteurs (Q21, Q22) pour les activer et les désactiver fonctionne en recevant une alimentation à partir d'une source d'alimentation différente des cellules unitaires (CL1 ... CLn).
